# EUROPÄISCHE PATENTSCHRIFT

(11) **EP 0 357 963 B1**
(45) Veröffentlichungstag und Bekanntmachung des Hinweises auf die Patenterteilung: **25.01.1995**
(21) Anmeldenummer: 89114403.2
(22) Anmeldetag: 04.08.1989
(51) Int. Cl.: G08G 1/16

(54) **Verfahren zur drahtlosen Datenübertragung sowie Datenübertragungsvorrichung**
Wireless data transmission method and device
Méthode et dispositif de transmission de données sans fil

(30) Priorität: 08.09.1988 DE 3830508
(43) Veröffentlichungstag der Anmeldung: 14.03.1990
(73) Patentinhaber: ROBERT BOSCH GMBH, 70442 Stuttgart (DE)
(72) Erfinder: Vollmer, Rudolph, Dr.-Ing., D-3201 Barienrode (DE); Fischer, Hans-Jürgen, Ing., D-3200 Hildesheim (DE); Brägas, Peter Dipl.-Ing., D-3200 Hildesheim (DE)

(56) Entgegenhaltungen:
- DE-A- 3 148 370
- FR-A- 2 598 839
- FR-A- 2 624 454
- GB-A- 2 069 208
- US-A- 3 891 966

## Beschreibung

Die Erfindung betrifft ein Verfahren zur drahtlosen Datenübertragung nach dem Oberbegriff des Anspruchs 1.

In der Veröffentlichung "Prometheus, ein europäisches Forschungsprojekt zur Gestaltung des Straßenverkehrs der Zukunft", Automobilindustrie, Nr. 2, April 1987, ist im Rahmen des Forschungsschwerpunktes PRO-NET ein Kommunikationsnetz zwischen den einzelnen Fahrzeugen beschrieben. Dabei sollen Informationen aus Bereichen, die für den Fahrer nicht direkt einsehbar sind, für den Kreuzungsverkehr, den Mit- und Gegenverkehr auf der befahrenen Strecke verfügbar gemacht werden, damit eine sichere und vorausschauende Fahrstrategie verfolgt werden kann.

Hierdurch besteht auch die Möglichkeit, in dichter Folge als Kolonne zu fahren und dabei Brems- und Beschleunigungsvorgänge aufeinander abzustimmen sowie den Luftwiderstand und damit den Verbrauch der in der Kolonne befindlichen Fahrzeuge insgesamt zu verringern.

Auch die VW-Dokumentation "Autoverkehr von morgen", Forschung für die Zukunft, Hinderniswarnung/Convoyfahren, befaßt sich mit der Koordination von Fahrzeuggruppen, die zur Steigerung der Kapazität der Verkehrswege, zur Entlastung der Fahrer und zur Verringerung des Verbrauchs in einer Kolonne auf einer speziellen Leitspur geführt werden. Dabei sind die Fahrzeuge mit Fahrzeugrechnern und einer Sensorik ausgestattet, die Abstandsmessungen zur Leitplankte sowie zum vorausfahrenden Fahrzeug vornehmen und über Datenfunk ihre Fahrmanöver koordinieren.

Bei diesen bekannten Systemen werden die Daten so ausgestrahlt, daß sie von allen in der Nähe befindlichen Fahrzeugen empfangen werden können. Die Empfänger der Fahrzeuge empfangen somit von allen in der Umgebung befindlichen Fahrzeugen gleichzeitig Daten, so daß von den Fahrzeugrechnern eine Vielzahl von Daten gleichzeitig oder komplexe Kanalzugriffsverfahren ausgewertet werden müssen. Dabei besteht die große Schwierigkeit, die empfangenen Daten den betreffenden Fahrzeugen zuzuordnen, damit für das eigene Fahrzeug relevante Daten von nicht relevanten Daten unterschieden werden können. Dies erfordert eine hohe Rechnerkapzität und eine lange Rechenzeit.

Aus der US 3,891,966 ist eine Fahrzeug-Kollisionswarneinrichtung bekannt, bei der vorn und hinten am Fahrzeug jeweils ein optischer Sender und Empfänger angebracht sind. Der Sender des nachfolgenden Fahrzeugs sendet ein Signal fl an das vorausfahrende Fahrzeug. Dieses moduliert das Signal und sendet ein Signal f2 an das nachfolgende Fahrzeug zurück. Aufgrund der Laufzeiten wird der Abstand zwischen den Fahrzeugen bestimmt und bei Unterschreiten eines vorgegebenen Mindestabstandes ein Warnsignal ausgelöst.

Aus der DE-A-3 148 370 ist die Übertragung von informationsabhängig modulierter gerichteter Strahlung zwischen Fahrzeugen mittels Infrarot-Sendern bzw. -Empfängern bekannt.

Der Erfindung liegt die Aufgabe zugrunde, ein Verfahren zur drahtlosen Datenübertragung dahingehend zu verbessern, daß eine eindeutige Zuordnung der empfangenen Daten möglich ist, um so das Fahren in der Fahrzeugkolonne sicherer zu gestalten.

Diese Aufgabe wird bei einem Verfahren nach dem Oberbegriff des Anspruchs 1 durch die im kennzeichnenden Teil angegebenen Merkmale gelöst.

Durch die erfindungsgemäße Maßnahme wird der Empfang von Daten auf das vorausfahrende und das nachfolgende Fahrzeug beschränkt. Dadurch wird einmal die auszuwertende Datenmenge eingeschränkt und kann mit weniger Rechneraufwand bearbeitet werden, zum anderen ist auch eine eindeutige Zuordnung zu den Fahrzeugen möglich, von dem diese Daten empfangen werden. Darüberhinaus ermöglicht das Verfahren auch eine Positionsbestimmung der Fahrzeuge in einer Kolonne.

Die Kolonne, die aufgrund von Verzögerungen bei der Datenübertragung und der Reaktionszeit der Aggregate auf Steuerungsbefehle als Feder-Masse-System im physikalischen Sinne betrachtet werden kann, erhält durch kurze Auswertezeiten beim Empfang der Daten eine hohe Eigenstabilität. Außerdem läßt sich die für einen Stabilitätsgrenzwert maximale Kolonnenlänge sehr schnell überwachen, so daß Gefahren durch eine zu große Kolonnenlänge bei gegebenen Straßen- und Witterungsverhältnissen vermieden werden können.

Weiterbildungen des erfindungsgemäßen Verfahrens ergeben sich aus den Ansprüchen 2 - 12.

Die Erfindung betrifft ferner eine Datenübertragungsvorrichtung nach dem Oberbegriff des Anspruchs 13.

Diesbezüglich liegt ihr die Aufgabe zugrunde, eine Datenübertragungsvorrichtung nach dem Oberbegriff des Anspruchs 13 dahingehend zu verbessern, daß eine eindeutige Zuordnung der empfangenen Daten möglich ist.

Diese Aufgabe wird bei einer Datenübertragungsvorrichtung nach dem Oberbegriff des Anspruchs 13 durch die im kennzeichnenden Teil angegebenen Merkmale gelöst.

Weiterbildungen und vorteilhafte Ausgestaltungen ergeben sich aus den Ansprüchen 14 - 25 sowie der nachfolgenden Beschreibung und der Zeichnung.

Die Erfindung wird anhand eines Ausführungsbeispiels, das in der Zeichnung dargestellt ist, näher erläutert. In der Zeichnung zeigen:
- Fig. 1: ein Fahrzeug mit darin angeordneten Fahrzeugsendern und -empfängern sowie einem Fahrzeugrechner,
- Fig. 2: eine Kolonne von Fahrzeugen mit Darstellung der Übermittlung der Positionen in der Kolonne sowie der Anzahl der Fahrzeuge in der Kolonne, und
- Fig. 3: eine Tabelle zur Veranschaulichung des Aufbaus der zu übertragenden Datenworte.

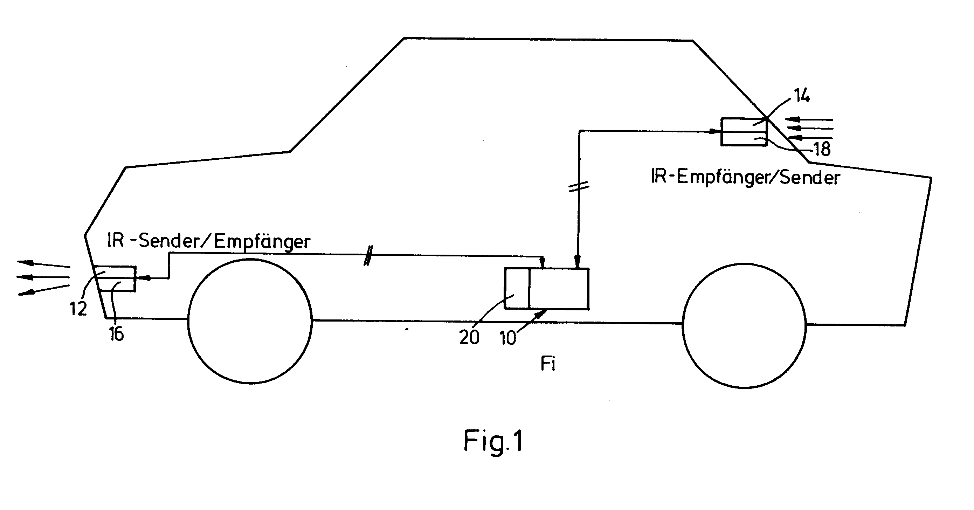

Fig. 1 zeigt ein Fahrzeug Fi, das mit einem Fahrzeugrechner 10, zwei Fahrzeugsendern 12, 14 und zwei Fahrzeugempfängern 16, 18 ausgestattet ist. Ein erster Sender 12 und ein erster Empfänger 16 befinden sich im vorderen Bereich des Fahrzeugs Fi und ein zweiter Sender 14 sowie ein zweiter Empfänger 18 befinden sich im hinteren Bereich des Fahrzeugs Fi. Die Sender 12 und 14 strahlen gerichtete Strahlung geringer Leistung aus. Die Strahlung des Senders 12 ist nur nach vorn, die Strahlung des Senders 14 ist nur nach hinten gerichtet.

Unter Fahrzeugsendern wird hier die Kombination aus einer Antenne und dem Trägerfrequenzerzeuger mit dem Modulator verstanden. Da für die Richtung der Strahlung im wesentlichen nur die Antenne ausschlaggebend ist, ist deren Anordnung am Fahrzeug hier maßgebend. Die Trägererzeuger und Modulatoren können also auch von der Antenne abgesetzt an anderer Stelle im Fahrzeug untergebracht sein.

Zweckmäßig sind auch die Empfänger so ausgebildet, daß sie nur von vorn bzw. von hinten einfallende Strahlung empfangen können, um so unerwünschte, z.B. durch Reflektionen von der Seite her einfallende Strahlung auszublenden. Für die Ausgestaltung der Empfänger gilt sinngemäß das gleiche wie für die Sender, d.h., die Empfangsantenne muß vorne und hinten angeordnet sein, während die Empfangselektronik auch an anderer Stelle im Fahrzeug untergebracht werden kann.

Als Träger eignen sich vorzugsweise Infrarot- oder Mikrowellenstrahlung, da diese einerseits sehr genau gerichtet werden kann und andererseits auch durch Hindernisse abgeschirmt wird. Die Sendeleistung und die Empfängerempfindlichkeit wird so bemessen, daß die Reichweite der modulierten Träger bei freier Sicht maximal 50 m beträgt und daß die Datenübertragung durch die Abschirmung eines in der Übertragungsstrecke befindlichen Fahrzeugs unterbrochen ist. Auf diese Weise wird sichergestellt, daß die Datenübertragung nur innerhalb der in einer Kolonne fahrenden Fahrzeuge erfolgt, und dabei auch nur von einem zum benachbarten Fahrzeug. Eine Übertragung zum übernächsten Fahrzeug wird also verhindert.

Besonders zweckmäßig ist es, wenn der erste Sender 12 und der erste Empfänger 16 im vorderen Bereich auf einer anderen Höhe angeordnet sind als der zweite Sender 14 und der zweite Empfänger 18 im hinteren Bereich des Fahrzeugs. Die Möglichkeit einer Übertragung zu mehreren Fahrzeugen durch den Fahrgastraum hindurch oder durch Reflektionen an der Straßenoberfläche unter den Fahrzeugen hindurch wird so unterbunden.

Der Fahrzeugrechner 10 ist mit beiden Fahrzeugsendern 12 und 14 und beiden Fahrzeugempfängern 16 und 18 verbunden. Seine Aufgabe besteht darin, die empfangenen Daten auszuwerten und für Anzeige und Steuerungsaufgaben Anzeigefeldern bzw. Steuerungsaggregaten zuzuleiten und Betriebs- und Fahrzeugdaten über die Sender zu übermitteln. Der Fahrzeugrechner 10 umfaßt einen Programmspeicher 20, in dem ein Programm gespeichert ist, mit dem die Fahrzeugdaten erfaßt und übermittelt werden können, bzw. empfangen und ausgewertet werden können. Dabei ermöglicht es das im Programmspeicher 20 gespeicherte Programm, die Position des Fahrzeugs innerhalb der Kolonne zu ermitteln.

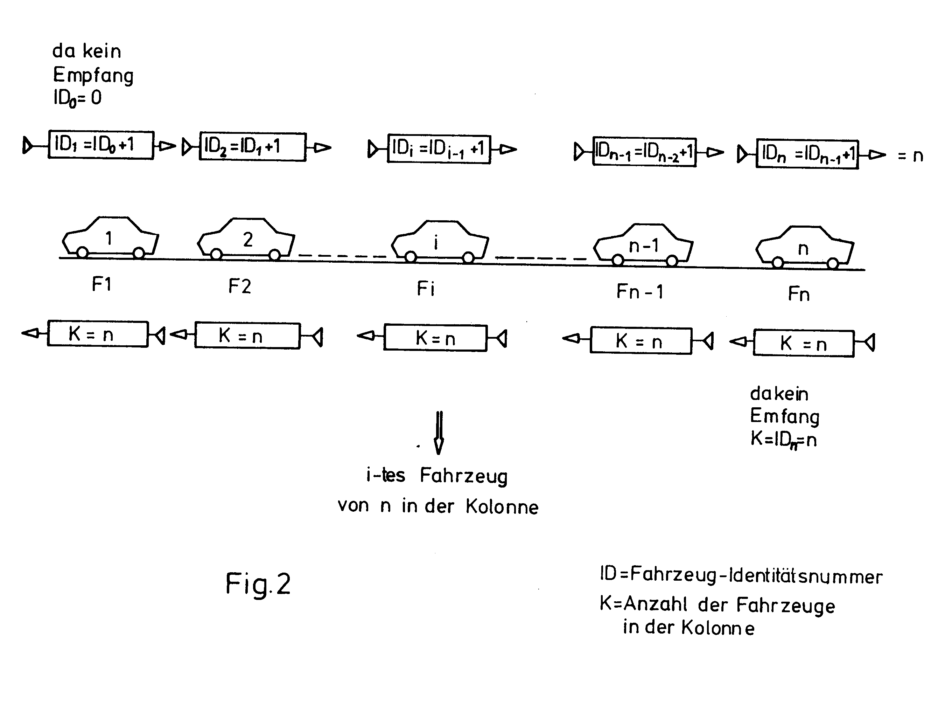

In Fig. 2 ist eine Fahrzeugkolonne aus n Fahrzeugen dargestellt, anhand der die Bestimmung der Positionen der Fahrzeuge in der Kolonne sowie die Anzahl der Fahrzeuge der Kolonne erläutert werden soll. Es wird davon ausgegangen, daß vor und hinter der Kolonne sich keine weiteren Fahrzeuge innerhalb der Reichweite der Empfänger und Sender befinden bzw. die Datenübertragung innerhalb der Kolonne hier endet, da die maximale Anzahl der Fahrzeuge in einer Kolonne erreicht ist, daß aber zwischen den Fahrzeugen eine Datenübertragung stattfindet.

Da sämtliche Fahrzeuge der Kolonne mittels ihrer Fahrzeugsender einen Träger ausstrahlen, wird von dem führenden Fahrzeug nur von hinten also mittels dem Empfänger 18 ein Träger empfangen. Der Fahrzeugrechner dieses Fahrzeuges wertet diese Tatsache dahingehend aus, daß das führende Fahrzeug die Anfangsposition mit der Fahrzeug-Identitätsnummer ID = 1 erhält.

Das zweite Fahrzeug in der Kolonne F2 empfängt sowohl von vorne als auch von hinten Träger und der Fahrzeugrechner 10 wertet diese Tatsache als Position innerhalb der Kolonne aus. Das Fahrzeug mit der Fahrzeug-Identitätsnummer 1 überträgt seine Identitätsnummer über den Sender 14 nach hinten und das zweite Fahrzeug nimmt mittels seines Empfängers 16 diese Information auf, worauf der Fahrzeugrechner 10 dieses Fahrzeugs nach der Beziehung ID₂ = ID₁+1 diesem Fahrzeug die Fahrzeug-Identitätsnummer 2 zuweist.

Die Fahrzeug-Identitätsnummer wird nun an das dritte Fahrzeug in der Kolonne übertragen und der beschriebene Vorgang wiederholt sich von Fahrzeug zu Fahrzeug, bis das letzte Fahrzeug der Kolonne erreicht ist und der Fahrzeugrechner 10 diesem Fahrzeug die Identitätsnummer n zuweist. Da dieses Fahrzeug nur von vorne Daten empfängt, wertet der Fahrzeugrechner des letzten Fahrzeugs diese Tatsache als Endposition der Kolonne aus. Die Positionsnummer n dieses Fahrzeuges wird dann durch den Fahrzeugrechner 10 mit der Anzahl K der in der Kolonne befindlichen Fahrzeuge gleichgesetzt und die Anzahl K wird nun in umgekehrter Richtung, also jeweils von den Sendern 12 zu den Empfängern 18 an jedes Fahrzeug in der Kolonne übermittelt.

Diese Vorgänge, also die Ermittlung der Fahrzeug-Identitätsnummern und die Übertragung der Anzahl der in der Kolonne befindlichen Fahrzeuge wird zyklisch wiederholt, so daß alle Fahrzeugrechner 10 innerhalb der Kolonne über diese beiden aktuellen Informationen verfügen.

Schließt ein Fahrzeug von hinten soweit auf, daß eine Datenübertragung zwischen diesem und dem letzten Fahrzeug der Kolonne stattfindet, so werden die entsprechenden Werte, also die Fahrzeug-Identitätsnummern und die Anzahl der Fahrzeuge K korrigiert und den übrigen Fahrzeugen in der Kolonne mitgeteilt. Es kann sein, daß bei zu vielen Fahrzeugen die Stabilität der Kolonne ähnlich einem Feder-Masse-System verloren geht, so daß die Anzahl der in die Kolonne aufzunehmenden Fahrzeuge nicht weiter steigen darf. Diese Information kann dann an das letzte Fahrzeug weitergegeben werden, so daß das Fahrzeug einen entsprechenden Sicherheitsabstand einhält und nun die Anfangsposition einer möglichen zweiten Kolonne übernimmt.

Eine entsprechende Korrektur der Fahrzeug-Identitätsnummern und der Anzahl der Fahrzeuge findet auch dann statt, wenn aus der bestehenden Kolonne Fahrzeuge ausscheren und nun eine Datenübertragung zwischen zwei Fahrzeugen stattfinden kann, die vorher durch ein weiteres Fahrzeug voneinander getrennt waren. Auch in diesem Fall ermöglicht die zyklische Wiederholung des Datenaustausches eine schnelle Korrektur der Fahrzeug-Identitätsnummern und der Anzahl der in der Kolonne vorhandenen Fahrzeuge.

Der in Fig. 2 dargestellte Weg der Datenübertragung, also bei den Fahrzeug-Identitätsnummern vom führenden Fahrzeug mit der Identitätsnummer 1 zum letzten Fahrzeug und dann mit der Anzahl K der in der Kolonne vorhandenen Fahrzeuge in umgekehrter Richtung kann auch vertauscht werden. Es können also Fahrzeug-Identitätsnummern zunächst vom letzten Fahrzeug der Kolonne aus in Fahrtrichtung weitergegeben werden und von dem führenden Fahrzeug aus die ermittelte Anzahl der in der Kolonne befindlichen Fahrzeuge in umgekehrter Richtung übertragen werden.

Außerdem sind im Fahrzeug Fi nicht näher lokalisiert dargestellte Sensoren angeordnet, die z.B. Angaben über die Geschwindigkeit, die Beschleunigung und den Lenkwinkel ermitteln und den Rechner 10 veranlassen, diese Angaben an die nachfolgenden Fahrzeuge zu übermitteln. Vom Rechner 10 können auch entsprechende Steuerungsdaten empfangen oder gewonnen werden, die die Fahrzeugaggregate beeinflussen. So kann z.B. beim Bremsen eines Fahrzeugs innerhalb der Kolonne und der daraufhin erfolgenden Übermittlung der negativen Beschleunigung an das nachfolgende Fahrzeug dieser Fahrzeugrechner veranlaßt werden, die Bremse zu betätigen und auch die nachfolgenden Fahrzeuge zu einem ähnlichen Verhalten veranlassen.

Besonders vorteilhaft ist dabei, daß die Daten selektiv nach hinten oder nach vorn gesendet werden können, um sie so nur an die Fahrzeuge zu übertragen, für die sie relevant sind. Die Fahrzeugrechner 10 der anderen Fahrzeuge Fi sind somit für andere Aufgaben frei.

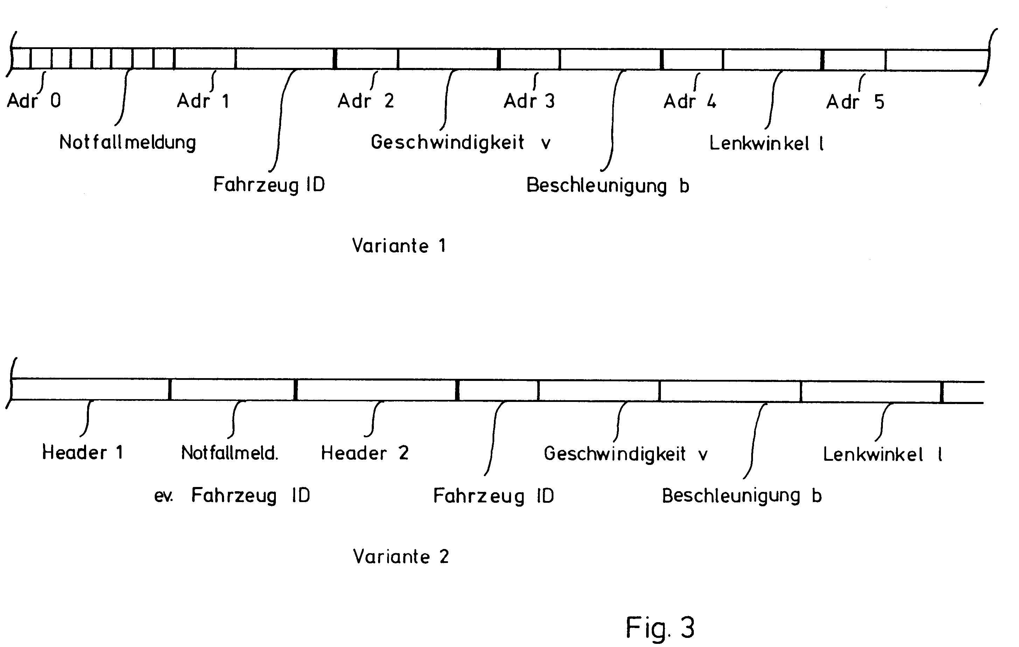

In Fig. 3 ist der Aufbau von Datenworten angegeben, wie sie für eine Übertragung von Daten von einem Fahrzeug zum anderen geeignet sind. Bei der Variante 1 werden die Daten jeweils als 8 Bit-Worte übertragen. Der Vorteil bei dieser Übertragung besteht darin, daß eine einfache Synchronisation möglich ist. Die 8 Bit-Worte enthalten die Art der Meldung, codiert als Adresse, gefolgt vom Inhalt der Meldung, also bei Adresse 0 eine Notfallmeldung, bei Adresse 1 die Fahrzeug-Identitätsnummer, bei Adresse 2 die Geschwindigkeit v, bei Adresse 3 die Beschleunigung b, bei Adresse 4 den Lenkwinkel l.

Die Variante 2 sieht vor, daß die Daten mit variablem Datenrahmen übertragen werden. Hierbei sind einem Header 1 eine Notfallmeldung und eventuell die Fahrzeugnummer zugeordnet und einem Header 2 weitere Daten wie die Fahrzeug-Identitätsnummer ID, die Geschwindigkeit v, die Beschleunigung b und der Lenkwinkel l.

Es besteht auch die Möglichkeit, das einige Fahrzeuge mit zusätzlichen Sensoren, wie z.B. einem Wild-Detektor, Eiswarner oder Nebelsichtgerät ausgestattet sind. Diese Eigenschaft kann den übrigen Fahrzeugen in einer Kolonne zu Nutze gemacht werden, wenn dieses Fahrzeug veranlaßt wird, die Anfangsposition der Kolonne einzunehmen um per Datenübertragung von Fahrzeug zu Fahrzeug die Sensorinformationen zu übermitteln.

Es besteht auch die Möglichkeit, daß die Fahrzeuge zusätzlich zu den Fahrzeugsendern 12 und 14 sowie den Fahrzeugempfängern 16 und 18 einen Sender größerer Reichweite sowie einen entsprechenden Empfänger besitzen, mit denen in an sich bekannter Weise ein Datenaustausch mit anderen Fahrzeugen, also solchen, die nicht in der Kolonne fahren, oder mit Leitstationen möglich ist. Diese Informationen können anderen Fahrzeugen, die nicht mit derartigen Geräten ausgestattet sind, über die erfindungsgemäßen Fahrzeugsender und -empfänger übermitteln werden.

## Patentansprüche

1. Verfahren zur drahtlosen Datenübertragung zwischen in einer Kolonne fahrenden Fahrzeugen mittels Fahrzeugsendern und -empfängern, die einen mit Daten modulierten Träger aussenden bzw. empfangen, wobei die modulierten Träger von jedem Fahrzeug aus als gerichtete Strahlung geringer Leistung, vorzugsweise als Infrarot- und/oder Mikrowellenstrahlung, nur nach vorn und hinten ausgestrahlt werden, dadurch gekennzeichnet, daß der Empfang dieser modulierten Träger zur Positionsbestimmung eines Fahrzeugs in einer Kolonne derart ausgewertet wird, daß ein Empfang von vorn und von hinten als Position innerhalb der Kolonne, ein Empfang nur von hinten als Anfangsposition der Kolonne und ein Empfang nur von vorn als Endposition der Kolonne gewertet wird, und daß diese so bestimmte Position als Positionsnummer in den Daten des modulierten Trägers enthalten ist.

2. Verfahren nach Anspruch 1, dadurch gekennzeichnet, daß die modulierten Träger nur von einem vorausfahrenden und/oder nachfolgenden Fahrzeug empfangen werden.

3. Verfahren nach Anspruch 1 oder 2, dadurch gekennzeichnet, daß die Strahlungsleistung und die Empfängerempfindlichkeit so bemessen sind, daß die Reichweite der modulierten Träger maximal in etwa 50 m beträgt.

4. Verfahren nach einem der vorhergehenden Ansprüche, dadurch gekennzeichnet, daß von dem die Anfangs- und/oder die Endposition einnehmenden Fahrzeug dessen Position dem nachfolgenden oder vorausfahrenden Fahrzeug übermittelt wird und von jenem wiederum die ihm zugewiesene Position dem weiteren nachfolgenden
oder
vorausfahrenden Fahrzeug übermittelt wird, bis in einer Richtung wenigstens einmal die gesamte Kolonne durchlaufen ist.

5. Verfahren nach Anspruch 4, dadurch gekennzeichnet, daß die Fahrzeuge in der Kolonne ihre jeweilige Position ermitteln, indem sie die empfangene Positionsnummer um einen vorgegebenen Wert verändern.

6. Verfahren nach Anspruch 4 oder 5, dadurch gekennzeichnet, daß nach Übermittlung der Positionen von einem Fahrzeug zum anderen die Positionsnummer des am Ende der Übertragungskette befindlichen Fahrzeugs mit der Anzahl der in der Kolonne befindlichen Fahrzeuge gleichgesetzt wird, und daß die Anzahl in umgekehrter Richtung an jedes Fahrzeug in der Kolonne übermittelt wird.

7. Verfahren nach einem der Ansprüche 4 bis 6, dadurch gekennzeichnet, daß die Übermittlung und Übertragung der Positionen und der Anzahl der Fahrzeuge zyklisch wiederholt werden.

8. Verfahren nach einem der vorherigen Ansprüche, dadurch gekennzeichnet, daß zusätzlich Betriebs-, Umgebungs- und Steuerungsdaten von Fahrzeug zu Fahrzeug übertragen werden.

9. Verfahren nach einem der vorhergehenden Ansprüche, dadurch gekennzeichnet, daß die Positionsnummer eines Fahrzeuges für die Überwachung der Fahrzeugkolonne benutzt wird.

10. Datenübertragungsvorrichtung zur Durchführung des Verfahrens nach einem der vorhergehenden Ansprüche, bestehend aus einem Fahrzeugrechner (10) sowie Fahrzeugsendern (12, 14) und -empfängern (16, 18), die einen mit Daten modulierten Infrarot- und/oder Mikrowellenträger ausstrahlen bzw. empfangen, wobei ein erster Sender (12) und ein erster Empfänger (16) im vorderen Bereich des Fahrzeugs (Fi) sowie ein zweiter Sender (14) und ein zweiter Empfänger (18) im hinteren Bereich des Fahrzeugs (Fi) angeordnet sind, die Sender (12, 14) gerichtete Strahlung geringer Leistung nur nach vorn bzw. hinten ausstrahlen und auch die Empfänger (16, 18) so ausgebildet sind, daß sie nur von vorn bzw. von hinten einfallende Strahlung empfangen, und daß der Fahrzeugrechner (10) durch das im Programmspeicher (20) gespeicherte Programm so gesteuert ist, daß der Empfang von modulierten Trägern zur Positionsbestimmung eines Fahrzeugs (Fi) in einer Kolonne derart ausgewertet wird, daß ein Empfang von vorn und hinten als Position innerhalb der Kolonne, ein Empfang nur von hinten als Anfangsposition der Kolonne und ein Empfang nur von vorn als Endposition der Kolonne gewertet wird, wobei diese so bestimmte Position als Positionsnummer in den Daten des modulierten Trägers enthalten ist.

11. Vorrichtung nach Anspruch 10, dadurch gekennzeichnet, daß der erste Sender (12) und der erste Empfänger (16) gegenüber dem zweiten Sender (14) und dem zweiten Empfänger (18) in unterschiedlicher Höhe angeordnet sind.

12. Vorrichtung nach einem der Ansprüche 10 oder 11, dadurch gekennzeichnet, daß die Strahlungsleistung und die Empfängerempfindlichkeit so bemessen sind, daß die Reichweite der modulierten Träger maximal 50 m beträgt.

13. Vorrichtung nach einem der Ansprüche 10 bis 12, dadurch gekennzeichnet, daß die Strahlungsleistung und die Empfängerempfindlichkeit so bemessen sind, daß die Datenübertragung von einem Sender zu einem Empfänger bereits durch die Abschirmung eines in der Übertragungsstrecke befindlichen Fahrzeugs unterbrochen ist.

14. Vorrichtung nach einem der Ansprüche 10 bis 13, dadurch gekennzeichnet, daß der Fahrzeugrechner (10) mit beiden Sendern (12, 14) und Empfängern (16, 18) verbunden ist und einen Programmspeicher (20) mit einem Programm zur Auswertung des Empfangs modulierter Träger umfaßt.

15. Vorrichtung nach Anspruch 14, dadurch gekennzeichnet, daß der Fahrzeugrechner (10) durch das im Programmspeicher (20) gespeicherte Programm außerdem so gesteuert ist, daß von dem die Anfangs- und/oder die Endposition einnehmenden Fahrzeug (F1; Fn) dessen Position dem nachfolgenden oder vorausfahrenden Fahrzeug (F2; Fn-1) übermittelt wird und von jedem wiederum die ihm zugewiesene Position dem weiteren nachfolgenden oder vorausfahrenden Fahrzeug übermittelt wird, bis in einer Richtung wenigstens einmal die gesamte Kolonne durchlaufen ist.

16. Vorrichtung nach Anspruch 14 oder 15, dadurch gekennzeichnet, daß der Fahrzeugrechner (10) durch das im Programmspeicher gespeicherte Programm außerdem so gesteuert ist, daß nach Übermittlung der Positionen von einem Fahrzeug (Fi) zum anderen (Fi+1) die Positionsnummer (n) des am Ende der Übertragungskette befindlichen Fahrzeugs (Fn) mit der Anzahl (K) der in der Kolonne befindlichen Fahrzeuge gleichgesetzt wird und daß die Anzahl (K) in umgekehrter Richtung an jedes Fahrzeug in der Kolonne übermittelt wird.

17. Vorrichtung nach einem der Ansprüche 14 bis 16, dadurch gekennzeichnet, daß im Programmspeicher (20) ein weiteres Programm gespeichert ist, mittels dem Betriebs-, Umgebungs- und Steuerungsdaten über die Fahrzeugsender (12, 14) ausgestrahlt und von den Fahrzeugempfängern (16, 18) empfangen und ausgewertet werden können.

18. Vorrichtung nach Anspruch 17, dadurch gekennzeichnet, daß Fahrzeug- und Umgebungssensoren zur Aufnahme von Betriebs- und Umgebungsdaten und daß Steuerungssysteme zur Beeinflussung der Fahrzeugaggregate, wie z. B. der Bremsen, des Motors, der Lenkung, im oder am Fahrzeug angeordnet und mit dem Fahrzeugrechner (10) verbunden sind.

19. Vorrichtung nach Anspruch 17 oder 18, dadurch gekennzeichnet, daß ein weiterer Sender und ein weiterer Empfänger mit Rundstrahlcharakteristik und größerer Sendeleistung zum Datenaustausch mit entfernten Fahrzeugen oder Leitstationen vorgesehen sind und mit dem Fahrzeugrechner (10) verbunden sind.

## Claims

1. Method for wireless data transmission between vehicles driving in a convoy by means of vehicle transmitters and vehicle receivers which respectively transmit and receive a carrier modulated by data, it being the case that starting from each vehicle the modulated carriers are radiated only ahead and rearwards as directional radiation of low power, preferably as infrared and/or microwave radiation, characterized in that for the purpose of determining the position of a vehicle in a convoy, the reception of these modulated carriers is evaluated in such a way that reception from ahead and from behind is evaluated as position within the convoy, reception only from behind is evaluated as lead position of the convoy and reception only from ahead is evaluated as rear position of the convoy, and in that this position thus determined is contained as position number in the data of the modulated carrier.

2. Method according to Claim 1, characterized in that the modulated carriers are received only by a preceding and/or following vehicle.

3. Method according to Claim 1 or 2, characterized in that the radiated power and the receiver sensitivity are dimensioned such that the range of the modulated carriers is at most approximately 50 m.

4. Method according to one of the preceding claims, characterized in that the vehicle occupying the lead and/or rear position communicates its position to the following or preceding vehicle, and the latter in turn communicates the position assigned to it to the further following or preceding vehicle until the entire convoy has been traversed at least once in one direction.

5. Method according to Claim 4, characterized in that the vehicles in the convoy determine their respective position by altering the received position number by a prescribed value.

6. Method according to Claim 4 or 5, characterized in that after communication of the positions from one vehicle to the other the position number of the vehicle located at the end of the transmission chain is equated with the number of vehicles located in the convoy, and in that the number is communicated in the reverse direction to each vehicle in the convoy.

7. Method according to one of Claims 4 to 6, characterized in that the communication and transmission of the positions and of the number of vehicles are repeated cyclically.

8. Method according to one of the preceding claims, characterized in that operational, environmental and control data are additionally transmitted from vehicle to vehicle.

9. Method according to one of the preceding claims, characterized in that the position number of a vehicle is used to monitor the vehicle convoy.

10. Data transmission device for carrying out the method according to one of the preceding claims, consisting of a vehicle computer (10) as well as vehicle transmitters (12, 14) and vehicle receivers (16, 18) which respectively radiate and receive an infrared and/or microwave carrier modulated with data, it being the case that a first transmitter (12) and a first receiver (16) are arranged in the front region of the vehicle (Fi) and a second transmitter (14) and a second receiver (18) are arranged in the rear region of the vehicle (Fi), the transmitters (12, 14) radiate directional radiation of low power only ahead and rearwards, and also the receivers (16, 18) are constructed such that they receive only radiation incident from ahead and from behind, and in that the vehicle computer (10) is controlled by the program stored in the program memory (20) in such a way that for the purpose of determining the position of a vehicle (Fi) in a convoy the reception of modulated carriers is evaluated in such a way that reception from ahead and behind is evaluated as position within the convoy, reception only from behind is evaluated as lead position of the convoy and reception only from ahead is evaluated as rear position of the convoy, this position thus determined being contained as position number in the data of the modulated carrier.

11. Device according to Claim 10, characterized in that the first transmitter (12) and the first receiver (16) are arranged at a different height with respect to the second transmitter (14) and the second receiver (18).

12. Device according to one of Claims 10 and 11, characterized in that the radiated power and the receiver sensitivity are dimensioned such that the range of the modulated carriers is at most 50 m.

13. Device according to one of Claims 10 to 12, characterized in that the radiated power and the receiver sensitivity are dimensioned such that the data transmission from a transmitter to a receiver is already interrupted by the screening of a vehicle located in the transmission link.

14. Device according to one of Claims 10 to 13, characterized in that the vehicle computer (10) is connected to both transmitters (12, 14) and both receivers (16, 18) and comprises a program memory (20) having a program for evaluating the reception of modulated carriers.

15. Device according to Claim 14, characterized in that the vehicle computer (10) is, moreover, controlled by the program stored in the program memory (20) in such a way that the vehicle (F1; Fn) occupying the lead and/or rear position communicates its position to the following or preceding vehicle (F2; Fn-1), and the latter in turn communicates the position assigned to it to the further following or preceding vehicle until the entire convoy has been traversed at least once in one direction.

16. Device according to Claim 14 or 15, characterized in that the vehicle computer (10) is, moreover, controlled by the program stored in the program memory in such a way that after transmission of the positions from one vehicle (Fi) to the other (Fi+1) the position number (n) of the vehicle (Fn) located at the end of the transmission chain is equated with the number (K) of vehicles located in the convoy, and in that the number (K) is communicated in the reverse direction to each vehicle in the convoy.

17. Device according to one of Claims 14 to 16, characterized in that there is stored in the program memory (20) a further program by means of which operational, environmental and control data can be radiated via the vehicle transmitters (12, 14) and can be received and evaluated by the vehicle receivers (16, 18).

18. Device according to Claim 17, characterized in that vehicle and environmental sensors for receiving operational and environmental data, and control systems for influencing the vehicle systems, such as the brakes, the engine, the steering, for example, are arranged in or on the vehicle and are connected to the vehicle computer (10).

19. Device according to Claim 17 or 18, characterized in that a further transmitter and a further receiver having an omnidirectional characteristic and a higher transmitter power are provided for the purpose of data exchange with remote vehicles or control stations and are connected to the vehicle computer (10).

## Revendications

1. Procédé de transmission de données sans fil entre un véhicule circulant dans une colonne à l'aide d'émetteurs et de récepteurs de véhicules qui émettent-reçoivent des porteuses modulées par les données, la porteuse modulée étant émise par chaque véhicule sous la forme d'un rayonnement directionnel de faible puissance, de préférence sous la forme d'un rayonnement infrarouge et/ou de micro-ondes, vers l'avant et vers l'arrière, procédé caractérisé en ce que la réception de ces porteuses modulées est exploitée pour déterminer la position d'un véhicule dans une colonne en ce qu'une réception par l'avant et par l'arrière est exploitée comme correspondant à une position à l'intérieur de la colonne, une réception par l'arrière seulement correspondant à la position de tête de la colonne et une réception par l'avant seulement correspondant à la position de queue de la colonne, et en ce que la position ainsi déterminée est contenue comme numéro de position dans les données de la porteuse modulée.

2. Procédé selon la revendication 1, caractérisé en ce que les porteuses modulées ne sont reçues que d'un véhicule amont et/ou d'un véhicule aval.

3. Procédé selon la revendication 1 ou 2, caractérisé en ce que la puissance de l'émission et la sensibilité de la réception sont choisies pour que la portée de la porteuse modulée soit au maximum d'environ 50 mètres.

4. Procédé selon l'une des revendications précédentes, caractérisé en ce que la position du véhicule de tête et/ou celle du véhicule de queue sont transmises au véhicule aval ou au véhicule amont qui transmet à son tour la position qui lui est attribuée vers l'autre véhicule en aval ou en amont, jusqu'à ce que toute la colonne ait été parcourue au moins une fois dans une direction.

5. Procédé selon la revendication 4, caractérisé en ce qu'on détermine la position respective des véhicules de la colonne en modifiant d'une valeur prédéterminée le numéro de position reçu par chaque véhicule.

6. Procédé selon la revendication 4 ou 5, caractérisé en ce qu'après transmission des positions d'un véhicule à l'autre, le numéro de position du véhicule qui se trouve à l'extrémité de la chaîne de transmission est rendu égal au nombre de véhicules appartenant à la colonne et ce nombre est transmis en sens inverse à chaque véhicule de la colonne.

7. Procédé selon l'une des revendications 4 à 6, caractérisé en ce que la transmission et le transfert des positions et le nombre des véhicules sont répétés de manière cyclique.

8. Procédé selon l'une des revendications précédentes, caractérisé en ce qu'on transmet en outre des données de fonctionnement, d'environnement et de commande, d'un véhicule à l'autre.

9. Procédé selon l'une des revendications précédentes, caractérisé en ce qu'on utilise le numéro de position d'un véhicule pour surveiller la colonne de véhicules.

10. Dispositif de transmission de données pour la mise en oeuvre du procédé selon l'une des revendications précédentes, comprenant un calculateur de véhicule (10) ainsi que des émetteurs de véhicule (12, 14) et des récepteurs de véhicule (16, 18) qui émettent-reçoivent des porteuses infrarouges et/ou en micro-ondes, modulées par les données, un premier émetteur (12) et un premier récepteur (16) étant prévus dans la zone avant du véhicule (Fi), un second émetteur (14) et un second récepteur (18) étant prévus dans la zone arrière du véhicule (Fi), les émetteurs (12, 14) émettant vers l'avant ou vers l'arrière un rayonnement directionnel de faible puissance et les récepteurs (16, 18) sont conçus pour que le rayonnement ne soit reçu que de l'avant ou de l'arrière et le calculateur (10) est commandé par le programme enregistré dans la mémoire de programme (20) pour exploiter la réception des porteuses modulées pour déterminer la position d'un véhicule (Fi) dans une colonne et une réception de l'avant et de l'arrière est interprétée comme une position dans la colonne, une réception par l'arrière seul étant interprétée comme position de tête de la colonne et une réception de l'avant seul étant interprétée comme position de queue de la colonne, la position ainsi déterminée étant contenue comme numéro de position dans les données de la porteuse modulée.

11. Dispositif selon la revendication 10, caractérisé en ce que le premier émetteur (12) et le premier récepteur (16) sont disposés à une hauteur différente du second émetteur (14) et du second récepteur (18).

12. Dispositif selon l'une des revendications 10 ou 11, caractérisé en ce que la puissance d'émission et la sensibilité de réception sont choisies pour que la portée de la porteuse modulée soient au maximum de 50 mètres.

13. Dispositif selon l'une des revendications 10 à 12, caractérisé en ce que la puissance d'émission et la sensibilité de réception sont dimensionnées pour que la transmission des données d'un émetteur vers un récepteur soit arrêtée par l'écran formé par un véhicule se trouvant dans le chemin de transmission.

14. Dispositif selon l'une des revendications 10 à 13, caractérisé en ce que le calculateur de véhicule (10) est relié aux deux émetteurs (12, 14) et aux deux récepteurs (16, 18), le calculateur comportant une mémoire (20) avec un programme pour l'exploitation de la réception de la porteuse modulée.

15. Dispositif selon la revendication 14, caractérisé en ce que le calculateur de véhicule (10) est commandé par le programme enregistré dans la mémoire (20) pour que le véhicule (F1, Fn) qui occupe la position de tête et/ou la position de queue, cette position soit transmise au(x) véhicule(s) (F2, Fn-1) amont ou aval qui transmet à son tour la position qui lui est attribuée vers le véhicule suivant, en amont ou en aval, jusqu'à ce que toute la colonne soit parcourue au moins une fois dans une direction.

16. Dispositif selon la revendication 14 ou 15, caractérisé en ce que le calculateur de véhicule (10) est commandé par le programme enregistré dans sa mémoire de programme pour qu'après la transmission des positions d'un véhicule (Fi) à l'autre (Fi+1) le numéro de position (n) du véhicule (Fn) occupant l'extrémité de la chaîne de transmission soit remplacé par le nombre (K) des véhicules formant la colonne et en ce que le nombre (K) est transmis en direction inverse à chaque véhicule appartenant à la colonne.

17. Dispositif selon l'une des revendications 14 à 16, caractérisé en ce que la mémoire de programme (20) contient au moins un autre programme qui transmet par les émetteurs de véhicule (12, 14) des données concernant le fonctionnement, l'environnement et la commande et ces données sont reçues par les récepteurs de véhicule (16, 18) et sont exploitées.

18. Dispositif selon la revendication 17, caractérisé en ce que les capteurs de véhicule et d'environnement sont montés pour la détection de données de fonctionnement et d'environnement et des systèmes de direction sont prévus pour influencer les composants du véhicule comme par exemple le freinage, le moteur, la direction et sont reliés au calculateur (10) du véhicule.

19. Dispositif selon la revendication 17 ou 18, caractérisé en ce qu'un autre émetteur et un autre récepteur ayant des caractéristiques d'émission circulaires et une plus grande puissance d'émission pour échanger des données avec des véhicules éloignés ou des postes de direction, sont reliés au calculateur (10) du véhicule.
